(19) **Europäisches Patentamt European Patent Office Office européen des brevets**

(11) **EP 4 704 287 A1**

(12) **EUROPEAN PATENT APPLICATION**

(43) Date of publication:
04.03.2026 Bulletin 2026/10

(21) Application number: 24315396.2

(22) Date of filing: 28.08.2024

(51) International Patent Classification (IPC):
$H02J\ 3/16^{(2026.01)}$ $\qquad$ $H02J\ 3/38^{(2026.01)}$
$H02J\ 3/46^{(2026.01)}$

(52) Cooperative Patent Classification (CPC):
H02J 3/16; H02J 3/381; H02J 3/46

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• NANTES UNIVERSITÉ
44035 Nantes Cedex 1 (FR)
• Ecole Centrale De Nantes
44300 Nantes (FR)

• Centre National de la Recherche Scientifique
75016 Paris (FR)

(72) Inventors:
• Marinescu, Bogdan
44000 Nantes (FR)
• Thomas, Vinu
44000 Nantes (FR)
• Goyal, Jitendra Kumar
632014 Tamilnadu (IN)

(74) Representative: Cabinet Chaillot
16/20, avenue de l'Agent Sarre
B.P. 74
92703 Colombes Cedex (FR)

(54) **DECENTRALIZED SECONDARY VOLTAGE CONTROL SYSTEM AND METHOD, AND COMPUTER PROGRAM PRODUCT**

(57) The invention relates to a secondary voltage control system for an electrical grid comprising electrical generators and pilot points, the system comprising two control loops: an outer control loop to regulate pilot point voltage to a reference value and an inner control loop to modify the reactive power flow from each electrical generator as per the signal from the outer control loop.

[Fig. 1]

**Description**

The invention concerns the domain of electrical grids, and relates more particularly to a secondary voltage control system and method and a computer program product.

French and Italian electric utility companies EDF and RTE are the pioneers in Secondary Voltage Control, SVC, work since the 1980s. In the first versions of the classic SVC for an electrical grid with several electrical generators supplying several pilot points in the electrical grid, the electrical grid is divided into zones and a Proportional-Integral, PI, controller for each zone generates a signal proportional to the required reactive power level to maintain the pilot point voltage to a reference level. The local reactive power controllers of the electrical generators operate on the basis of the PI controller output signal and of the participation factors of the individual electrical generators.

Following these first versions, a coordinated implementation has been proposed, where several pilotpoints can be jointly regulated, as disclosed in Secondary voltage regulation for improved power plant reactive power coordination, Dong, F. and Chowdhury, B.H., Electric Power Components and Systems, 2007, 35(10), pp.1181-1199. The coordinated automatic control of reactive powers from the electrical generators in a zone helps to address this issue and is effective in managing the voltages in larger zones of the electrical grid. This coordinated control has been implemented in years 2000 in the western part of the French grid (Nantes dispatching) and is still now operating. Few years after, it has been adopted also by electric utility companies TERNA for the Italian grid and ELIA for the Belgian grid.

These controls rely on big thermal plants connected to the transmission grid. No feasible engineering solution exists today for the integration of Renewable Energy Sources, RES, to such kind of SVC.

In all approaches, the SVC controller provides a correction signal to the Automatic Voltage Regulator, AVR, of the electrical generators. The decoupling of the time scales of the AVR and the reactive power control loops is essential to avoid the interactions between the loops, but it also leads to a non-minimum phase behavior that may lead to transient instability.

An alternative to the coordinated control was proposed in Structural Analysis and Improved Reactive Power Alignment for Secondary Voltage Control, A. Bouzid, B. Marinescu and G. Denis, Proc. of PowerTech 2019, https://hal.archives-ouvertes.fr/hal-02511464, in terms of an advanced robust model-based dynamic control. This also solves the conflict between the tracking objectives for voltage and reactive powers which are mixed into a quadratic function that is to be minimized in the aforementioned coordinated controls. The last generation of centralized control has been proposed in Structural Analysis and Improved Reactive Power Alignment for Secondary Voltage Control, A. Bouzid, B. Marinescu and G. Denis, Proc. of PowerTech 2019.

Another problem with the above-mentioned SVC schemes is the centralized nature of control. A decentralized type of control which operates on the individual electrical generators to participate in the SVC and is able to maintain the pilot point voltage at the required level would be highly beneficial.

The existing secondary voltage control systems used in power system networks are therefore capable of regulating the pilot point voltages by adjusting the reactive power from thermal power plants connected to the transmission network only. The actuators of the existing secondary voltage control systems are located only in the transmission network. These systems operate on a centralized manner, which makes them highly dependent on the information transmitted from different power plants to the central controller. Also, they lack plug-and-play capacity when there is a need to add or remove generators participating in the secondary voltage control.

Indeed, the benefits of a decentralized SVC control scheme are its resiliency against electrical generator disconnection and reconnection (i.e., the so-called plug and play) and communication delays or failures along with local implementation at each RES generator.

The invention aims to solve the above-mentioned shortcomings of the prior art and relates to a secondary voltage control system for an electrical grid comprising a transmission grid, the electrical grid comprising N electrical generators in the transmission grid, the N electrical generators supplying P pilot points in the transmission grid, M electrical generators among the N electrical generators being participating electrical generators participating in the secondary voltage control of the electrical grid, N, M and P being non-zero natural integers with $M \leq N$, each participating electrical generator $G_i$, with $i \in \{1, .., M\}$, having a respective terminal voltage $V_i$, a respective reactive power $Q_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control system further comprises a reactive power alignment module for calculating a setpoint reactive power $Q_i^{ref}$ of each participating electrical generator $G_i$ as a function of the specified setpoint values of the P pilot point voltages for each pilot point to have its specified setpoint value, an outer control loop module for calculating, for each participating electrical generator $G_i$, an adjusted setpoint reactive power $Q_i^{ref'}$ as a function of the setpoint reactive power $Q_i^{ref}$ and of the values of the reactive powers $Q_i$ of the M participating electrical generators $G_i$, and an inner control loop module for calculating, for each participating electrical generator $G_i$, an adjustment voltage $u_i$ to be supplied to the $AVR_i$ of

the participating electrical generator $G_i$ for the participating electrical generator $G_i$ to supply a reactive power $Q_i^{ref'}$, wherein for each participating electrical generator $G_i$, the $AVR_i$ further regulates the participating electrical generator $G_i$ as a function of the adjustment voltage $u_i$ and of the participation factor $Q_i^{pf}$.

Another object of the invention is a secondary voltage control system for an electrical grid comprising a transmission grid and R distribution grids, a border transformer between the transmission grid and each of the R distribution grids, each border transformer having a reactive power $Qb_j$, with $j \in \{1, .., R\}$, the electrical grid comprising N electrical generators in the transmission grid and the R distribution grids, the N electrical generators supplying P pilot points in the transmission grid and the R distribution grids, M electrical generators among the N electrical generators being participating electrical generators participating in the secondary voltage control of the electrical grid, N, M, P and R being non-zero natural integers with M≤N, each participating electrical generator $G_i$, with $i \in \{1, .., M\}$, having a respective reactive power $Q_i$, a respective terminal voltage $V_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control system further comprises a reactive power alignment module for calculating a setpoint reactive power $Q_i^{ref}$ of each participating electrical generator $G_i$ as a function of the specified setpoint values of the P pilot point voltages for each pilot point to have its specified setpoint value, an outer control loop module for calculating, for each participating electrical generator $G_i$, an adjusted setpoint reactive power $Q_i^{ref'}$ as a function of the setpoint reactive power $Q_i^{ref}$, of the values of the reactive powers $Q_i$ of the M electrical generators $G_i$ and of the values of the reactive powers $Qb_j$ of the R border transformers, and an inner control loop module for calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the electrical generator $G_i$ as a function of the adjustment voltage $u_i$ and of the participation factor $Q_i^{pf}$.

According to an embodiment, the input of the $AVR_i$ regulating the participating electrical generator $G_i$ is the sum of the setpoint terminal voltage $V_i^{ref}$ and of the adjustment voltage $u_i$ minus the terminal voltage $V_i$. Another object of the invention is a secondary voltage control method for an electrical grid comprising a transmission grid, the electrical grid comprising N electrical generators in the transmission grid, the N electrical generators supplying P pilot points in the transmission grid, M electrical generators among the N electrical generators being participating electrical generators participating in the secondary voltage control of the electrical grid, N, M and P being non-zero natural integers with M≤N, each participating electrical generator $G_i$, with $i \in \{1, .., M\}$, having a respective terminal voltage $V_i$, a respective reactive power $Q_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control method comprises calculating a setpoint reactive power $Q_i^{ref}$ of each participating electrical generator $G_i$ as a function of the specified setpoint values of the P pilot point voltages for each pilot point to have its specified setpoint value, calculating, for each participating electrical generator $G_i$, an adjusted setpoint reactive power $Q_i^{ref'}$ as a function of the setpoint reactive power $Q_i^{ref}$ and of the values of the reactive powers $Q_i$ of the M participating electrical generators $G_i$, and calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the participating electrical generator $G_i$ as a function of the adjustment voltage $u_i$ and of the participation factor $Q_i^{pf}$.

Another objet of the invention is a secondary voltage control method for an electrical grid comprising a transmission grid and R distribution grids, a border transformer between the transmission grid and each of the R distribution grids, each border transformer having a reactive power $Qb_j$, with $j \in \{1, .., R\}$, the electrical grid comprising N electrical generators in the transmission grid and the R distribution grids, the N electrical generators supplying P pilot points in the transmission grid and the R distribution grids, M electrical generators among the N electrical generators being participating electrical generators participating in the secondary voltage control of the electrical grid, N, M, P and R being non-zero natural integers with M≤N, each participating electrical generator $G_i$, with $i \in \{1, .., M\}$, having a respective reactive power $Q_i$, a respective terminal voltage $V_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control method comprises calculating a setpoint reactive power $Q_i^{ref}$ of each participating electrical generator $G_i$ as a function of the specified setpoint values of the P pilot point voltages for each pilot point to have its specified setpoint value, calculating, for each participating electrical generator $G_i$, an adjusted setpoint reactive power $Q_i^{ref'}$ as a function of the setpoint reactive power $Q_i^{ref}$, of the values of the reactive powers $Q_i$ of the M electrical generators $G_i$ and of the values of the reactive powers $Qb_j$ of the R border transformers, and calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the electrical generator $G_i$ as a function of the adjustment voltage $u_i$ and of the participation factor $Q_i^{pf}$. Another objet of the invention is a computer program product comprising instructions that, when the program is executed on a computer, cause the computer to carry out the method as disclosed above.

This invention therefore relates to a new and improved secondary voltage control (SVC) system to regulate the voltage levels at multiple pilot points in a power system network by controlling the reactive power from the conventional thermal power plants and renewable energy based power plants spanning across transmission and distribution networks.

The new secondary voltage control system operates on a decentralized manner that allows the participation of renewable energy generators on a plug and play basis with the actuators spread across the entire power system network/electrical grid. The plug and play feature is beneficial in the future power grids where there will be more renewable energy generation and these generators can seamlessly participate in secondary voltage control. This invention is applicable to any power system network regardless of the size of the network or the type of generators or the location of the generators in the network. It enables the improved participation of renewable energy generators to the secondary voltage ancillary service.

The new secondary voltage control system consists of decentralized voltage controllers implemented on individual generator units. This secondary voltage control system has larger application in distribution grids with many renewable energy generators. Using the conventional secondary voltage control, the generators in the distribution grid do not participate in the secondary voltage control. The proposed system enables the indirect participation of all the generators in the secondary voltage control scheme. Also, the non-participation of any one generator does not affect the voltage control, because the other generators will adjust the reactive power production to bring the pilot point voltages near to the desired values. The control system uses the information about the voltage of the pilot point that needs to be regulated.

The implementation of the secondary voltage control system consists of two control loops: an outer control loop and an inner control loop. The objective of the outer control loop is to regulate the pilot point voltage to the reference value. The global voltage objective of the pilot point is transformed into local reactive power objectives by a static computation. The outer control loop generates a control signal based on the error between the pilot point voltage reference and the actual pilot point voltage and the output of the static computation block. The objective of the inner control loop is to modify the reactive power flow from each generator as per the signal from the outer control loop. The inner control loop of the secondary voltage control system is designed with smaller time constants to have a faster response, while the outer control loop of the secondary voltage control system is designed with larger time constants. For the implementation, a model-free control strategy named intelligent-proportional secondary voltage control system can be used, which uses ultra-local model based on inputoutput measurements that consists of an online numerical differentiation algorithm.

In order to better illustrate the subject-matter of the invention, an embodiment will now be described, in an illustrative and non-limiting way, in relation to appended drawings.

On the drawings:

[Fig. 1] is a schematic diagram of an embodiment of a SVC system according to the invention.

[Fig. 2] is a schematic diagram of an inner control loop module of a SVC system according to the invention.

[Fig. 3] is a schematic diagram of an outer control loop module of a SVC system according to the invention.

[Fig. 4] is a benchmark system used to validate and show the efficacy of the SVC system according to the invention.

[Fig. 5] is the pilot point voltage response for a step change in $V_{pp}^{ref}$ with a benchmark of the invention.

[Fig. 6] is the reactive power response for a step change in $V_{pp}^{ref}$ with a benchmark of the invention.

[Fig. 7] is the terminal voltage response for a step change in $V_{pp}^{ref}$ with a benchmark of the invention.

[Fig. 8] is the pilot point voltage response for a step change in $V_{pp}^{ref}$ with a benchmark of the invention, with a delay of 28 s in $V_{pp}$.

[Fig. 9] is the pilot point voltage response for a step change in $V_{pp}^{ref}$ with a benchmark of the invention, with a delay of 10 s in $V_{pp}$ with conventional PI controller.

[Fig. 10] is the reactive power response for a step change in $V_{pp}^{ref}$ with a benchmark of the invention, with a delay of 28 s in $V_{pp}$.

[Fig. 11] is the terminal voltage response for a step change in $V_{pp}^{ref}$ with a benchmark of the invention, with a delay of 28 s in $V_{pp}$.

[Fig. 12] is the pilot point voltage response for a load perturbation with a benchmark of the invention.

[Fig. 13] is the reactive power response for a load perturbation with a benchmark of the invention.

[Fig. 14] is the terminal voltage response for a load perturbation with a benchmark of the invention.

[Fig. 15] is the pilot point voltage response for a line perturbation with a benchmark of the invention.

[Fig. 16] is the reactive power response for a line perturbation with a benchmark of the invention.

[Fig. 17] is the terminal voltage response for a line perturbation with a benchmark of the invention.

[Fig. 18] is the pilot point voltage response for a generator disconnection with a benchmark of the invention.

[Fig. 19] is the reactive power response for a generator disconnection with a benchmark of the invention.

[Fig. 20] is the terminal voltage response for a generator disconnection with a benchmark of the invention.

[Fig. 21] is the pilot point voltage response for a generator reconnection (delayed participation of the generator) with a benchmark of the invention.

[Fig. 22] is the reactive power response for a generator reconnection with a benchmark of the invention.

[Fig. 23] is the terminal voltage response for a generator reconnection with a benchmark of the invention.

The embodiments will be discussed below with respect to an electrical grid comprising a transmission grid and possibly at least one distribution grid, if applicable a border transformer between the transmission grid and each of the distribution grids, the electrical grid comprising electrical generators in the transmission grid and if applicable in the distribution grids, the electrical generators supplying pilot points in the transmission grid and if applicable in the distribution grids, some of the electrical generators among the electrical generators being participating electrical generators participating in the secondary voltage control of the electrical grid.

A Secondary Voltage Control system has to regulate grid voltage and to manage reactive power, which can be expressed in the two following equations:

[Math. 1]

$$V_{pi} \xrightarrow{t \to \infty} V_{pi}^{\,ref}, i = 1, ..., p$$

[Math. 2]

$$Q_i \xrightarrow{t \to \infty} Q_i^{\,ref}, i = 1, ..., n$$

where, in the first equation, $V_{pi}$ represents the voltage of pilot-point $i$ and $V_{pi}^{ref}$ the setpoint of the pilot point $i$ and, in the second equation, $Q_i$ is the reactive power produced by an electric generator (Renewable Energy Source or classic thermic) $i$, $G_i$ and $Q_i^{ref}$ is its setpoint.

The SVC solutions according to prior art are conceived only for electrical generators connected to a transmission grid. This is because such existing SVC solutions are based on a strong coordination and centralization of the control actions which need information back and forward from each participating RES. Coordination with RES connected to the distributed side is thus not possible and this is a major barrier to extension of voltage service duties to renewables which are mostly connected to the distribution grids.

The proposed invention allows participation of generators on both sides, transmission and distribution, without distinction between thermal and RES electrical generators and with a minimal information exchanged through the border between transmission and distribution grids.

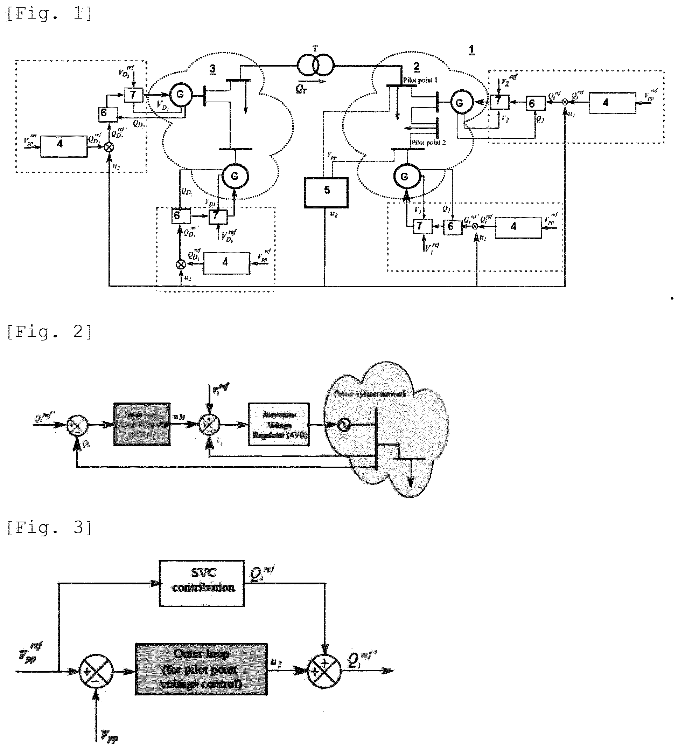

An electrical grid 1 with a SVC system according to the invention is shown in Figure 1.

In the non-limiting embodiment of Figure 1, the electrical grid 1 comprises a transmission grid 2 and a distribution grid 3, with a border transformer T between the transmission grid 2 and the distribution grid 3.

The invention would also apply to only the transmission grid or to a transmission grid 2 connected to several distribution grids, with a border transformer between the transmission grid and each distribution grid.

As can be seen in Figure 1, the transmission grid 2 comprises two electrical generators G, and the distribution grid also comprises two electrical generators G, which can be thermal or renewal energy source generators.

The invention is not limited by the number of electrical generators in the transmission grid and distribution grid and the skilled person would readily understand that any number of electrical generators can be provided in the transmission grid and distribution grid.

In the embodiment disclosed, all electrical generators are participating. It is to be understood that there can also be electrical generators that do not participate in the secondary voltage control.

Each electrical generator G is controlled by an Automatic Voltage Regulator, AVR, 7 as is well known in the art.

The transmission grid 2 also comprises two pilot points.

As can also be seen in Figure 1, each electrical generator G is controlled by a SVC according to the invention, which comprises, for each electrical generator G, a reactive power alignment module 4, an outer control loop module 5 and an inner control loop module 6 which will be described in more detail hereinafter. The value of $V_{pp}{}^{ref}$ is given and sent to all generators through any kind of communication network, as is the participation factor $Q_i{}^{pf}$ of each electrical generator $G_i$.

As will be disclosed in more detail hereinafter, pilot-point voltage objectives are transformed into reactivepower objectives ($Q_i{}^{ref}$) for each electrical generator G and border transformer T of the transmission grid 2 and inside each distribution grid 3 at a static level. Next, these objectives are tracked locally by the fast inner control loop module 6 at a dynamic level. Adjustment in the tracking of the pilot point voltages ($V_{pp}{}^{ref}$) is done by the slower outer control loop module 5.

The dynamics of the secondary voltage control (usually less than 5 minutes) is slower than the AVR 7 dynamics. Therefore, the local electric dynamics can be neglected and the power system dynamics under the SVC action can be analyzed and modelled with the help of sensitivities matrices $C_v \in R^{pxn}$ and $C_q \in R^{nxn}$ of the pilot point voltage $V_{pp} = [V_{pp1}, ..., V_{ppp}]^T$ and reactive powers $Q = [Q_1, ..., Q_n]^T$ with respect to the terminal voltage of the electrical generators G, $V_t = [V_{t1}, ..., V_{tn}]^T$, respectively, where n denotes the number of electrical generators G that participate in the secondary voltage control

[Math. 3]

$$V_{pp} = C_v V_t$$

[Math. 4]

$$Q = C_q V_t$$

The static level of the SVC will now be described.

We first study the transmission level, with a direct control.

This computation concerns the transmission grid 2 part. Border transformers (T in conceptual Fig. 1) are considered as transmission grid generators as they inject an amount of reactive power $Q_T$. They are thus part of the variables $Q_i$ below.

The reactive power management has been defined as a realtime alignment of all reactive power generations of participating generators:

[Math. 5]

$$Q_i^{ref} = Q_{bal} = \frac{\sum_{i=1}^{n} Q_i}{\sum_{i=1}^{n} Q_i^{pf}}$$

It has been proved in Structural Analysis and Improved Reactive Power Alignment for Secondary Voltage Control, A. Bouzid, B. Marinescu and G. Denis, Proc. of PowerTech 2019, that the reactive power alignment to [Math. 5] allows each generator to reach in steady state the same level of reactive power generation:

[Math. 6]

$$\frac{Q_i(t)}{Q_i^{pf}} \to c \text{ as } t \to \infty$$

where $Q_i{}^{pf}$ is the (constant) participation factor of electrical generator $G_i$, and c is a constant which corresponds to each steady-state of the system.

Based on equation [Math. 6] above, one can write $Q_i = Q_i^{ref} = cQ_i^{pf}$, where the signal $Q_i^{ref}$ represents the steady-state value of reactive power of aligned generators.

It is now possible to study how many generators G can be aligned or, equivalently, how many references can be imposed for $Q_i$. Using equation [Math. 3], the steady-state corresponds to the algebraic system

[Math. 7]

$$V_{pp}^{ref} = C_v C_q^{-1} Q_i^{ref}, \ i = 1, ..., n$$

which is a system of p equations with n+p unknowns ($V_{pp}^{ref}$, $Q_i^{ref}$, i=1, ..., n). It has multiple solutions, among which the one for which all reactive powers are aligned:

[Math. 8]

$$Q_i^{ref} = cQ_i^{pf}, \ i = 1, ..., n$$

Two cases must be distinguished:

- p=1, i.e., an SVC zone with only one pilot point: following Lemma 2.1 in Structural Analysis and Improved Reactive Power Alignment for Secondary Voltage Control, A. Bouzid, B. Marinescu and G. Denis, Proc. of PowerTech 2019, (8) has a unique solution which is compliant with the full alignment of equation [Math. 8].
- p > 1, i.e., an SVC zone with more than one pilot point: only n-p generators can be aligned for equation [Math. 8]. The above steady-state considerations are compliant with the dynamic limitations of the internal model principle: only n references can be robustly tracked, i.e., p pilot point voltages and reactive powers of n-p sources (generators and border transformers), if pilot point voltages are prioritized.

As a consequence, with a full control of $V_{pp}$ and Q, alignment of all sources can only be ensured in the case p=1. However, if the control is structured at two new levels, as shown below, both full alignment of Q and tracking of $V_{pp}^{ref}$ can be ensured in the general case (p>1) and also in a decentralized way.

We now consider the distribution level with an indirect control.

Once computed from the transmission level, $Q_T^{ref}$ of each border transformer T should be dispatched inside its corresponding distribution grid. This is done solving a similar static problem. More specifically, $Q_{Dk}$ is computed for each generator of the distribution grid 3 from the information of $Q_T^{ref}$, in order to align its steady-state value with the others generator units G, as per the participation factors $Q_{Dk}^{pf}$ indicated for each unit.

Steady state condition of equation [Math. 8] is rewritten as :

[Math. 9]

$$\frac{Q_{D_k}}{Q_{D_k}^{pf}} = c'$$

where c' is constant. As for the transmission grid 2 side, the following equations can be rewritten:

[Math. 10]

$$Q_{D_k} = cQ_{D_k}^{pf}$$
$$Q_T^{ref} = \sum_{k=1}^{m} C_{D_k} Q_{D_k}$$

Now, from given $Q_T^{ref}$, one can compute the unknown terms, $Q_{Dk}$ and c' in equation [Math. 10] by solving this system of equations. Solution of this system is unique (independently of the number of pilot points as it is the case for the transmission grid side).

This indirect way of participation is an important two fold contribution.

From the technical point of view, it allows contribution of the RES generators on the distribution side in a similar manner with the ones on transmission side. From the regulatory point of view, it allows a participation of distribution grid RES to SVC with minimal requirements of coordination between Transmission System Operators, TSOs, and Distribution System Operators, DSOs, and with minimal data exchange and regulatory constraints.

As a matter of fact, this reactive power requirements $Q_T^{ref}$ at the borders is already existing today and fully accepted by all actors of the electric sector (TSOs, DSOs and regulatory commissions).

The inner control loop module 6 and outer control loop module 5 will now be described in more detail.

The inner control loop module 6 aims to achieve one of the primary objectives of SVC, i.e., dynamic reactive power alignment and control of each generator G that contributes in the SVC action. This includes generators G connected on both sides - transmission grid 2 and distribution grid 3 - but, as the dynamics are different, the parameters tuning is specific as described in more detail hereinafter.

The block diagram of the inner control loop is shown in Fig. 2 for an electrical generator $G_i$. The input of the $AVR_i$ of the electrical generator $G_i$ is $V_i^{ref}$ of the electrical generator $G_i$ plus $V_i$ which is measured at the output of the electrical generator $G_i$ minus the output of the outer control loop module $u_{1i}$.

The inner control loop regulates the reactive power generation $Q_i$ (for the distribution level $Q_i$ is $Q_{iD}$) to the reference $Q_i^{ref'}$ which consists in the reference $Q_i^{ref}$ computed before plus an additional dynamic correction from the outer control loop (see description of outer control loop below) which finally results in $Q_i^{ref'}$. It is slower that the primary AVR loop in order not to interact with it. Concerning the outer control loop module 5, as the above SVC computation of references $Q_i^{ref}$ is off line and steady-state, the purpose of the outer control loop is to cancel any gap that may exist in steady state for the pilot-point voltage tracking. For that, the following output is chosen:

[Math. 11]

$$ y = \| V_{pp} - V_{pp}^{ref} \|_2 $$

So $y^{ref}=0$.

The block diagram of the outer control loop along with the SVC contribution block is shown in Fig. 3.

It should be noted that the cascade connection of the two loops in Fig. 3 is original and allows one to decouple in time the two loops. It is structurally and conceptually different from the reactive power level computation and local reactive loop of the classic SVC.

Inner control loop is operated faster (around 5 to 10 times) than the outer SVC loop. This is done because exact tracking of pilot point voltage is not possible unless the reactive power tracking in each generator G reaches the steady state according to the SVC objectives.

The implementation of inner and outer control loops will now be described.

Controllers with integral effect are designed and implemented for achieving the SVC objectives in each loop. Although different types of controller designs and implementation approaches can be used for this invention, a model-free control approach was preferred for the implementation of the two control loops in this invention. In model-free control, an ultra-local model is used and updated instead of a complex analytic model of the process. The controller is synthesized as an intelligent proportional (iP) or intelligent Proportional Integral (iPI) controller because of its simplicity in gain tuning compared to classic P and PI controllers.

Model-free control scheme has already been used by different authors and frequently implemented for power electronic applications and for regulating complex networks such as HVDC due to its simplicity and effectiveness. The brief discussion on the design procedure for the two loops controllers (DTiPI and DTiP2) based on model-free control scheme is presented below.

Design of DTiP1 controller for inner control loop

Concerning the inner control loop, for tracking of reactive power of each generator G, the model-free control scheme is used since it requires only the information of output, i.e., $Q_i(k)$ and the control input $u_{1i}(k)$ for its implementation. For inner reactive power control loop, the ultra-local discrete-time model is given by:

[Math. 12]

$$ \dot{Q}_i(k) = F_{1_i}(k) + \alpha_{1_i} u_{1_i}(k), \quad i = 1, \cdots, n $$

where $\alpha_{1i} \in R$ is the design parameter which is selected by the designer in such a way that the magnitude of $\alpha_{1i} u_{1i}(k)$ is equal to the magnitude of $\dot{Q}_i(k)$. $F_{1i}(k)$ includes the information of any types of model uncertainties and disturbances acting on the system. Based on equation [Math. 12], the DTiP1 controller for reactive power controller in the inner control loop is designed as:

[Math. 13]

$$u_{1_i}(k) = -\frac{F_{1_i}(k) - \dot{Q}_i^{ref'}(k) + K_{p1_i}e_{1_i}(k)}{\alpha_{1_i}}$$

where $K_{p1i}$ is the tuning gain, $e_{1i}(k) = Q_i(k)-Q_i^{ref'}$ is the error term which is asymptotically set to zero.

For implementing the controller of equation [Math .13], one needs the information of unknown quantity $F_{1i}(k)$ which is to be estimated. The estimated value of $F_{1i}(k)$ is termed as $\overline{F}_{1i}(k)$ which is computed as:

[Math. 14]

$$\overline{F}_{1_i}(k) = \dot{Q}_i(k) - \alpha_{1_i}u_{1_i}(k - h_d)$$

where $u_{1i}(k-h_d)$ is the control input delayed by the small amount $h_d$, which is a small lag time given to the controller $u_{1i}(k)$ and is required for the estimation of $\overline{F}_{1i}(k)$. $\dot{Q}_i(k)$ is obtained with the help of numerical algebraic differentiation techniques such as those disclosed in Numerical differentiation with annihilators in noisy environment, Mboup, M., Join, C. and Fliess, M., Numerical Algorithms, 2009, 50(4), pp.439-467 and in Timevarying high-gain observers for numerical differentiation, Chitour, Y., IEEE Transactions on Automatic Control, 2002, 47(9), pp.1565-1569.

Implementation of these derivators is the kernel point of the iPI controls and it is highly dependent on the dynamics of the system. It will be presented below for each of the three cases of the invention (inner control loop on transmission side, on distribution case and outer control loop) .

Design of DTiP2 controller for outer control loop

Concerning the outer control loop, for the tracking of pilot point voltage, again a model free control scheme is used since it requires only the information of output, i.e., y from equation [Math. 11] to provide the control input $u_2(k)$ for implementation. The control input $u_2(k)$ is generated with the help of DTiP2 controller. The ultra-local discrete-time model for outer control loop is given by:

[Math. 15]

$$\dot{y}(k) = F_2(k) + \alpha_2 u_2(k)$$

where $\alpha_2$ E R is the design parameter which is chosen by the designer in such a way that $|\alpha_2 u_2(k)| = |\dot{V}_{pp}(k)|$.

$F_2(k)$ consists of knowledge of any types of model uncertainties and disturbances acting on the system. Based on equation [Math. 15], the DTiP2 controller for outer control loop is designed as:

[Math. 16]

$$u_2(k) = -\frac{F_2(k) + K_{p2}e_2(k)}{\alpha_2}$$

where $K_{p2}$ is the tuning gain.

[Math. 17]

$$e_2(k) = y(k) = \left\| V_{pp}(k) - V_{pp}^{ref} \right\|_2$$

$e_2(k)$ is the tracking error which is driven to zero.

For implementing the controller of equation [Math. 16], one needs the information of the unknown quantity, $F_2(k)$

which is to be estimated in the same manner as before. The estimated value of $F_2(k)$ is defined as $\bar{F}_2(k)$ which is calculated as :

[Math. 18]

$$\bar{F}_2(k) = \dot{y}(k) - \alpha_2 u_2(k - h_d)$$

where $u_2(k-h_d)$ is the control input delayed by the small amount $h_d$, which is the small time lag given to the controller $u_2(k)$ for the computation of $\bar{F}_2(k)$.

$\dot{V}_{pp}(k)$ is obtained with the help of numerical differentiation techniques as discussed earlier.

With the help of signal $Q_i^{ref}$ generated by the SVC contribution block and control signal $u_2(k)$ from the outer control loop module 5, finally, one can compute the reactive power reference signal $Q_i^{ref'}$ of each generator G for inner control loop to achieve the set-point tracking of pilot point voltage along with the alignment of reactive power that contributes in the SVC action. It is expressed at the transmission level as:

[Math. 19]

$$Q_i^{ref'} = Q_i^{ref} + u_2$$

At the distribution level, equation [Math. 19] holds good with $Q_i^{ref} = Q_{Dk}$ solution of equation [Math. 10] and $Q_{Dk}^{ref'}$ instead of $Q_i^{ref'}$ and u2 with $Q_{Dk}$ solution of equation [Math. 10]. By the use of equations [Math. 13], [Math. 17] and [Math. 19], the SVC objectives can be easily achieved. Algebraic differentiation techniques have received a lot of attention due to their remarkable features such as high precision, high accuracy in terms of reducing noise errors, and importance in the field of engineering like signal processing, image processing, automatic control and applied mathematics. It works well in a noisy environment. For implementation of the numerical differentiation technique, one has to select the optimal values of two parameters, i.e., sampling time ($T_{ndf}$) and number of samples ($N_{ndf}$) in such a way that the length of the window time of the differentiators is small enough.

A numerical differentiation method is described below which is used for the implementation of an intelligent PI controller. Operational calculus allows for the substitution of integrals for derivatives. This gives better performance in noisy environments where normal differentiation techniques will amplify the noise signals. Taylor expansion of a signal x(t) at t=0 is given below:

[Math. 20]

$$x(t) = \sum_{n=0}^{\infty} \frac{x^{(n)}(0)}{n!} t^n$$

Truncating to the first-order yields:

[Math. 21]

$$x(t) = a_0 + a_1 t$$

where $a_0$ is the zeroth order derivative which is the function itself and $a_1$ is the first order derivative. To estimate the first-order derivative, $a_1$ in the operational domain:

[Math. 22]

$$X(s) = \frac{a_0}{s} + \frac{a_0}{s^2}$$

To remove $a_0$, both sides are multiplied by s and the derivatives are calculated to s:

[Math. 23]

$$-s^{-2}a_1 = s\frac{dX(s)}{ds} + X(s)$$

To reduce the noise, multiply both sides by a negative power of $s^1$.

[Math. 24]

$$-s^{-3}a_1 = s^{-1}\frac{dX(s)}{ds} + s^{-2}X(s)$$

Since, d/ds is the time domain equivalent of multiplying by -t, it generates the estimator $\hat{a}_1$ of $a_1$:

[Math. 25]

$$\hat{a} = \frac{3!}{T^3}\int_0^T (T - 2\tau)y(\tau)\,d\tau$$

In the numerical differentiation, the first order derivative is estimated using the above expression numerically. T is relatively small here. T depends on the sampling period and noise intensity. This window [0,T] is sliding to provide estimation at every moment.

[Math. 26]

$$\hat{F} = \dot{y} - \alpha u(t - h)$$

where u(t - h) is the control signal delayed by a small non-zero amount h, which is the short time window needed for computation.

For the inner control loop, the numerical differentiation of the reactive power reference is needed. For the outer control loop, the numerical differentiation of the pilot point voltage reference is needed.

For the inner control loop, the numerical differentiation of the reactive power reference is needed. For the outer control loop, the numerical differentiation of the pilot point voltage reference is needed.

Numerical differentiation is the method of calculating the derivative of a signal using numerical methods. This method is useful to find the derivative of some functions for which it is difficult to find the derivative using analytic methods. Implementation of the numerical differentiation is done using the algorithm given above.

The selection of the time step and the number of samples analysed in a moving window is very crucial to ensure the proper operation of the numerical differentiation. It is essential that the differentiation step size is selected greater than the simulation step size but much lesser than the time constant of the plant to be control. The number of samples of analysed also should be large enough for the proper operation of the numerical differentiation.

In secondary voltage control, the controller must be tuned based on the dynamics of the system. The inner control loop being faster than the outer control loop, the numerical differentiation step size must be adapted to these time constants.

The time scale for the inner control loop for the transmission and distribution grid is less than 1 s. The outer control loop time scales are in the range of 30 s to several minutes.

A benchmark system used to validate and show the efficacy of the newly proposed SVC scheme is now described.

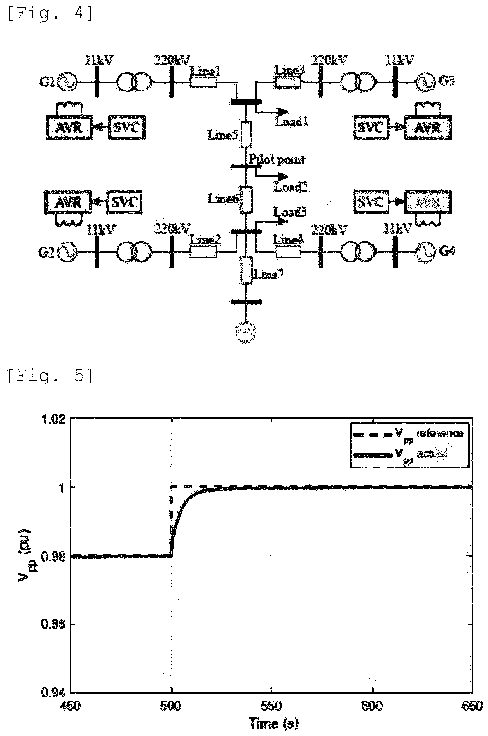

The benchmark consists of a single zone of the power system with four synchronous generators (G1, G2, G3 and G4) of 200 MVA capacity each as shown in Fig. 4. The generators produce power at 11 kV, 50 Hz and a step-up transformer increases the voltage to 220 kV. The excitation system of each synchronous generator is controlled using an AVR. The SVC attempts to provide correction signals to the AVRs to maintain the pilot point voltage of the zone at the reference value. There are three loads (Load1, Load2 and Load3) connected to the 220 kV line. The benchmark system is modelled in MATLAB/Simulink Simscape® using discrete phasor simulation. The sample time for the power system elements, $T_{power}$ = 10 μs and the sample time for the controller is $T_{control}$ = 100 μs.

The sensitivity matrices computed for the above benchmark system is given by:

$$C_v = [0.2715 \ 0.0989 \ 0.2746 \ 0.1022]$$

$$C_q = \begin{bmatrix} +2.5370 & -0.3528 & -0.9798 & -0.3647 \\ -0.2729 & +2.8570 & -0.2761 & -0.6678 \\ -0.9774 & -0.3560 & +2.4910 & -0.3680 \\ -0.2729 & -0.6605 & -0.2823 & +2.7530 \end{bmatrix}$$

The corresponding values of tuned parameters of DTiP1 and DTiP2 controllers are given as:

$$K_{p1} = \begin{bmatrix} 2 & 0 & 0 & 0 \\ 0 & 2 & 0 & 0 \\ 0 & 0 & 2 & 0 \\ 0 & 0 & 0 & 2 \end{bmatrix}, \ \alpha_1 = \begin{bmatrix} 4346 & 0 & 0 & 0 \\ 0 & 4564 & 0 & 0 \\ 0 & 0 & 4410 & 0 \\ 0 & 0 & 0 & 4584 \end{bmatrix}$$

$K_{p2}$=0.09, $\alpha_2$=50000.

The following case studies are carried out on the benchmark system to demonstrate the performance of the proposed SVC strategy.

Case 1: Step change in $V_{pp}^{ref}$:

In this case, a step increase in $V_{pp}^{ref}$ is applied at 500 s, and the response of the pilot point voltage to this step change is observed with the proposed controller.

Fig. 5 shows the response of the pilot point voltage to the step change in $V_{pp}^{ref}$. One can notice the response time of about 300s which is compliant with the specifications of the SVC according to the invention. It can be observed from Fig. 5 that the actual pilot point voltage is tracking ref $V_{pp}^{ref}$.

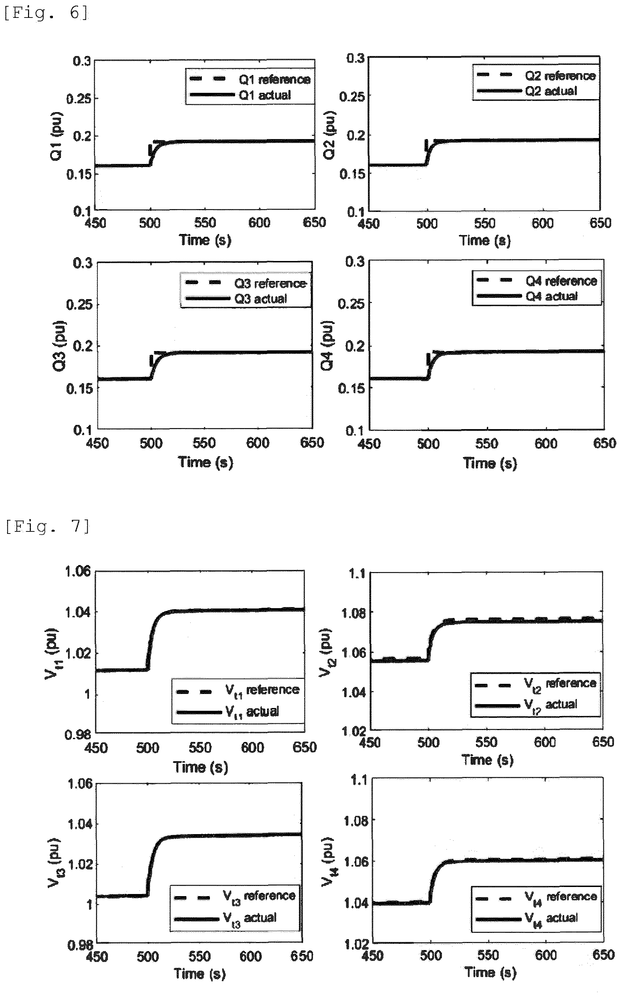

Fig. 6 shows the reactive power produced by the four generators during the step change in $V_{pp}^{ref}$. It can be seen from Fig. 6 that the reference reactive power for the generators changes when $V_{pp}^{ref}$ changes and the actual reactive power is seen to track the reference reactive power.

Fig. 7 shows the terminal voltage response of the four generators during the step change in $V_{pp}^{ref}$. The AVR control loop being faster than the SVC control loop, the terminal voltage tracks the reference signal quickly.

Case 2: Step change in $V_{pp}^{ref}$ with effect of delay in $V_{pp}$:

In this case, the behavior of the benchmark system for a step change in $V_{pp}^{ref}$ with a delay in the measurement of $V_{pp}$ is analyzed. The step change occurs at 280 s and the measurement delay of $V_{pp}$ is 28 s.

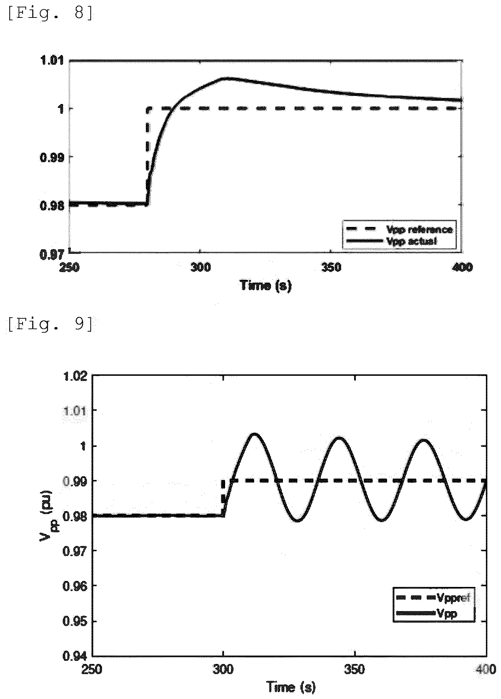

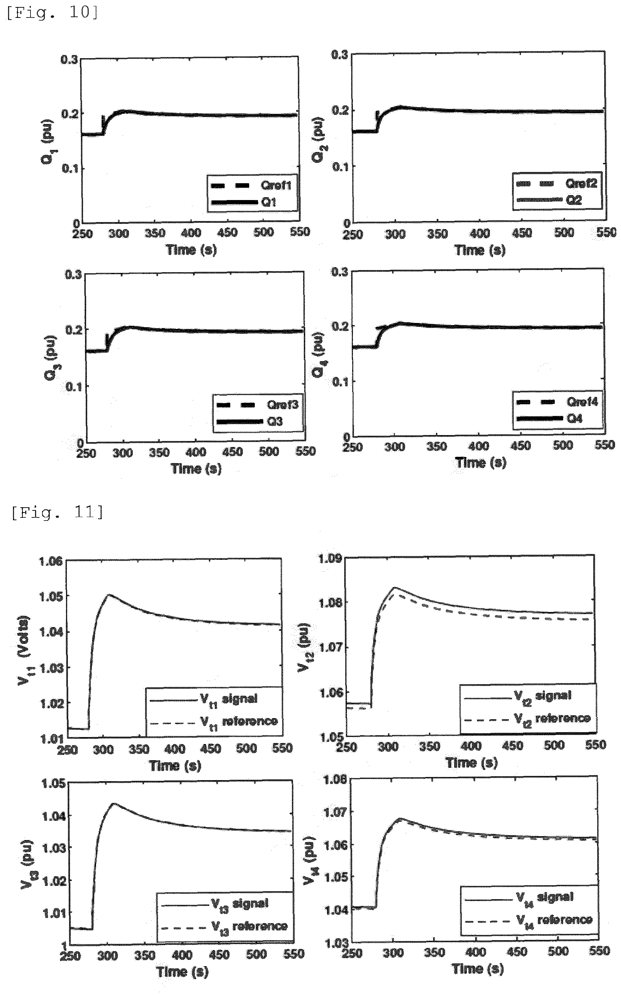

Fig. 8 shows the response of the pilot point voltage when $V_{pp}^{ref}$ changes from 0.98 pu to 1 pu at 280 s. It can be observed from Fig. 10 that Vpp tracks $V_{pp}^{ref}$ in less than 200 s, even though there is a delay of 28 s in the measurement of $V_{pp}$.

This indicates that the proposed decentralized model-free control strategy is having reasonable robustness against measurement delays in $V_{pp}$.

The results of the same control architecture implemented with standard PI controllers for both inner and outer control loops is shown in Fig. 9 which shows the unstable response with a $V_{pp}$ delay of 10 s. This demonstrates the improved performance of the proposed decentralized model-free SVC strategy.

Fig. 10 and Fig. 11 show the reactive power response and the terminal voltage response of the individual generators for this case. The terminal voltages of the generators quickly track the reference values and this results in a good tracking performance of the reactive powers of the individual generators.

Case 3: Load perturbation

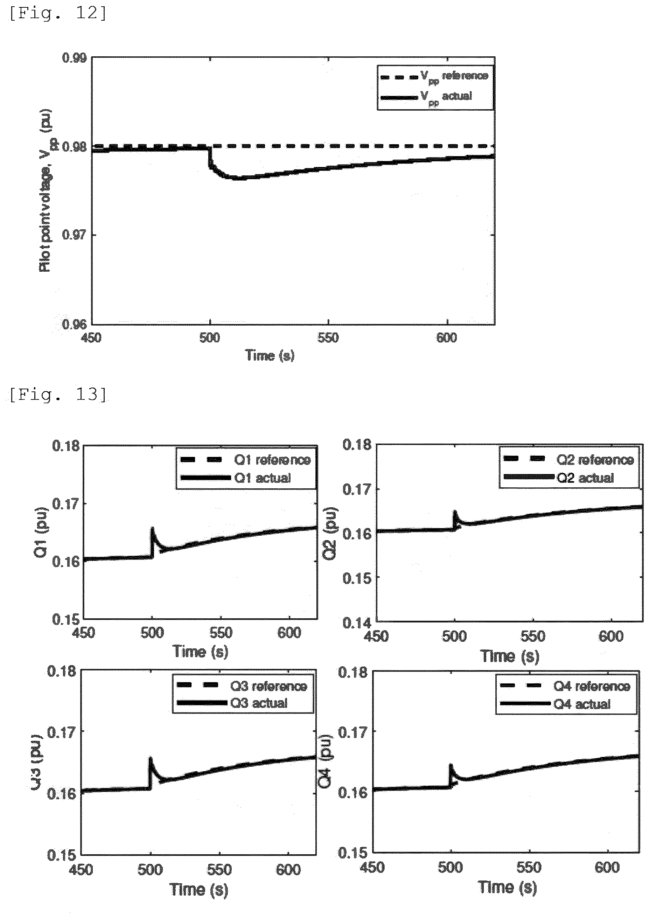

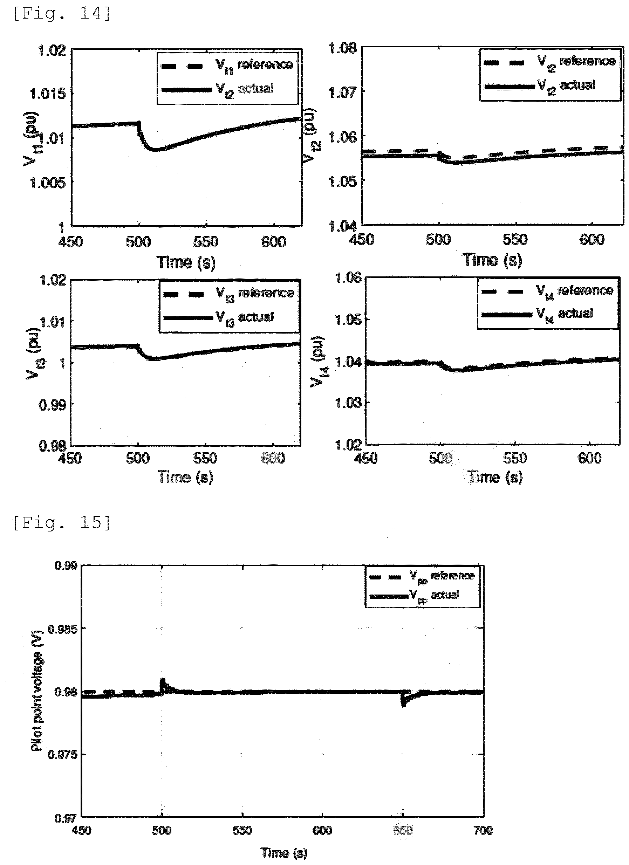

In this case, the robustness of the controller for a step change in the load is analyzed. At 500 s, an additional inductive load of 5 MVAR is connected at the pilot point and the response of the pilot point voltage to this change in load is observed. Fig. 12 shows the response of the pilot point voltage to this load perturbation. As seen in Fig. 12, Vpp drops from its steady state value after the load perturbation and later, returns to its previous value. The reactive power contributions of the individual generators are shown in Fig. 13. The reactive power references of the individual generators are seen to have changed after the load perturbation and the actual reactive power follows the reference signals quickly. The terminal voltage response of the generators are shown in Fig. 14. The terminal voltages of the generators are seen to closely follow the terminal voltage references during the load perturbation.

Case 4: Transmission line perturbation

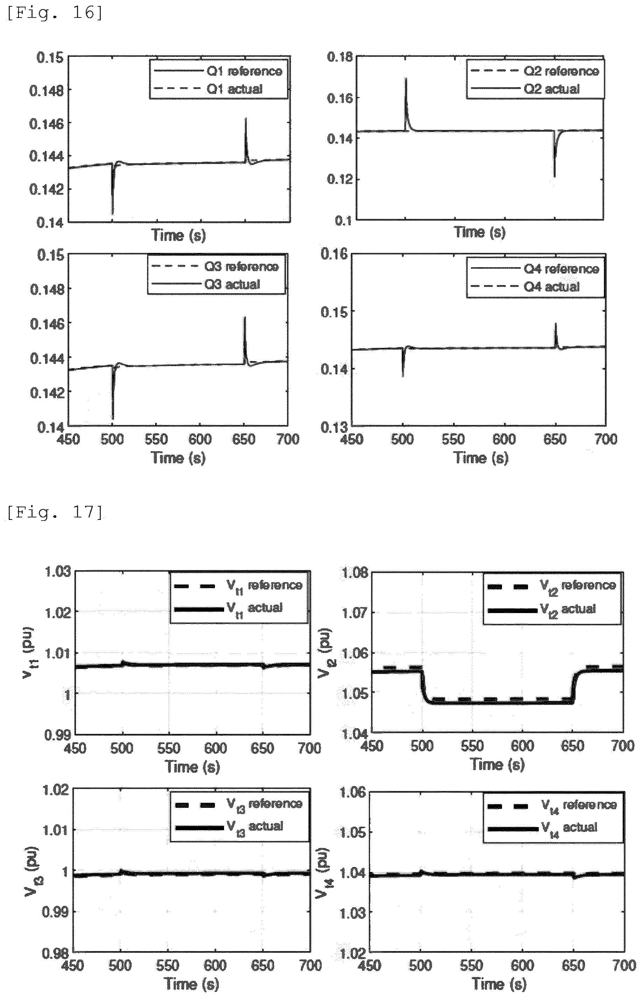

In this case, the impact of change in transmission line parameters on the robustness of the proposed control strategy is analyzed. At 500 s, the parameters of the transmission line connected to the generator 2 are perturbed by adding another transmission line of the same parameters, in parallel. At 650 s, the parallel connected transmission line is removed. The change in the transmission line parameters affects the voltage and reactive power contributions of the individual generators. Fig. 15 shows the response of the pilot point voltage during the line parameter perturbation. As seen from Fig. 15, at the instant of parameter change at 500 s, there is an upward deviation in $V_{pp}$. But $V_{pp}$ is seen to be returning to the earlier steady state value after the perturbation. At 650 s, there is a downward deviation in $V_{pp}$ but it returns to the earlier steady state value after a transient period. Fig. 16 and Fig. 17 show the reactive power response and terminal voltage response, respectively, of the individual generators during the line parameter perturbation. The results indicate the robust performance of the proposed control strategy during disturbances.

Case 5: Generator disconnection

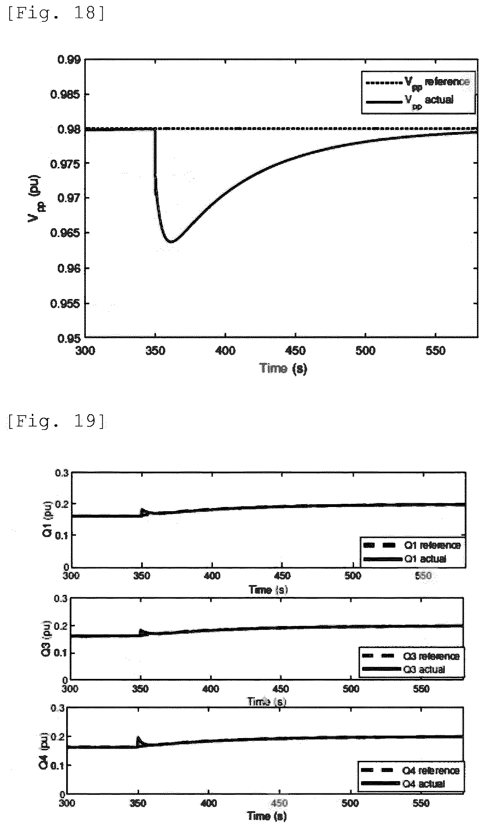

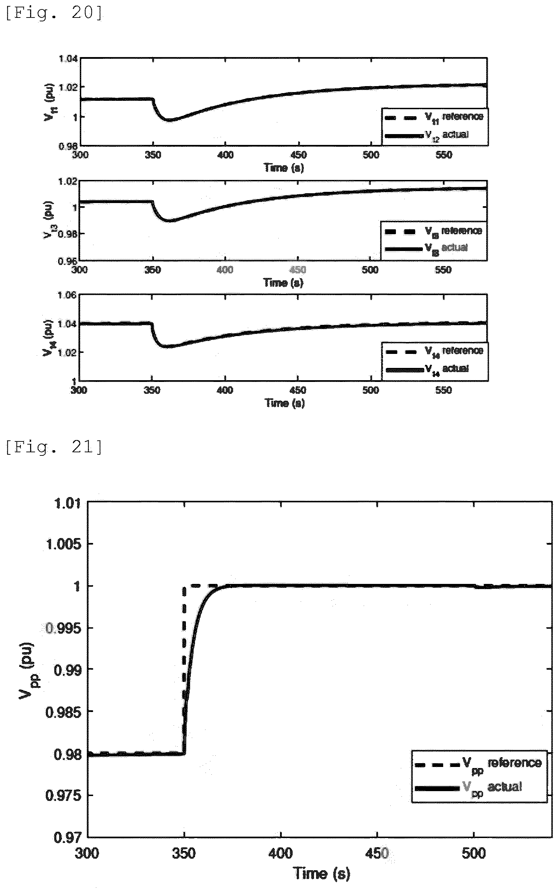

In this case, the impact of disconnection of an individual generator participating in the secondary voltage control is studied. At 350 s, the generator G2 is disconnected and the response of the pilot point voltage is shown in Fig. 18. When the generator G2 is disconnected, the pilot point drops momentarily.
With the proposed SVC strategy, the pilot point voltage returns to the reference value in less than 250 s after the generator disconnection, as shown in Fig. 18. The regulation of the pilot point voltage was possible with the remaining three generators supplying additional reactive power as seen in Fig. 19. Fig. 20 shows the terminal voltage responses of the remaining three generators. After the generator G2 disconnection, the terminal voltages of the remaining three generators (G1, G3 and G4) reach a new steady state value to compensate for the loss of generator G2.

Case 6: Generator reconnection to SVC

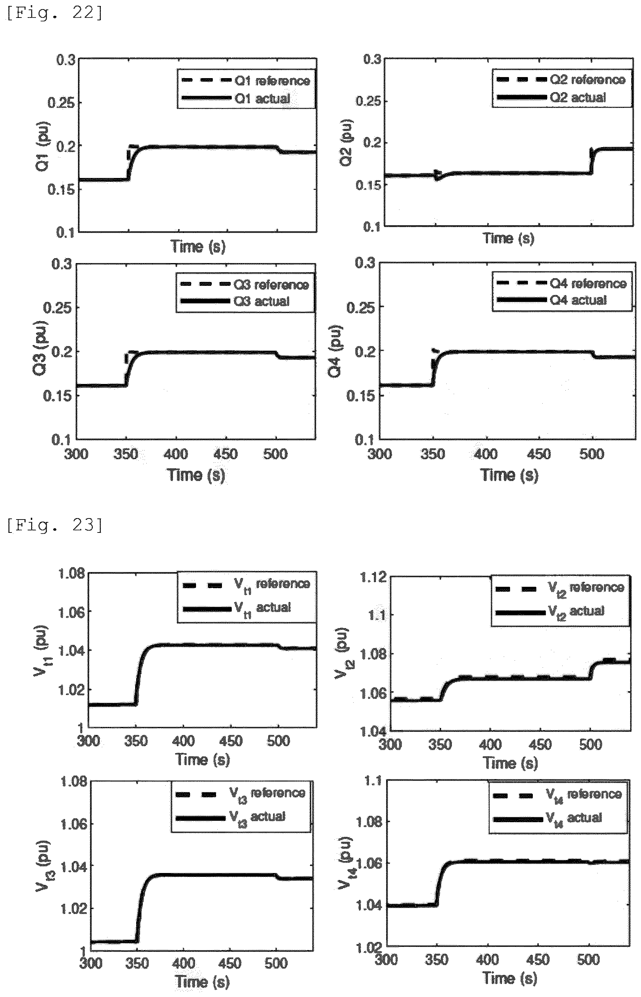

In this case, generator G2 is reintegrated to SVC. Initially, all the generators except G2 participate in SVC. At 350 s, there is a step increase in $V_{pp}^{ref}$ and at 500 s, G2 starts the participation in the SVC.
Fig. 21 shows the response of the pilot point voltage. It can be seen that $V_{pp}$ follows $V_{pp}^{ref}$ after 350 s, when $V_{pp}^{ref}$ changes from 0.98 pu to 1 pu.
When G2 starts participating in the SVC at 500 s, there is a minor dip in $V_{pp}$ which is quite negligible. Fig. 22 shows the reactive power generations of the individual generators. Just after 350 s, G1, G3 and G4 start contributing reactive power. At 500 s, when G2 starts its participation in SVC, the reactive power contributions of the individual generators are modified due to the contribution of G2. Once G2 starts contributing for SVC, the reactive power generations of G1, G3 and G4 reduce compared to their values before 350 s. Fig. 23 shows the terminal voltages of the individual generators for the delayed participation of G2 in SVC. After 350 s, the terminal voltages of the generators increase due to increases in the reference pilot point voltage.
The rise in terminal voltage of G2 is less after 350 s, when it is not participating in SVC. After 500 s, the terminal voltage of G2 rises further due to its participation in SVC, while the terminal voltage of other generators reduces slightly. The results indicate that the proposed control strategy works satisfactorily when a nonparticipating generator in the SVC starts its participation at a later stage. This proves plug and play capability of the proposed control, which is a crucial advantage for the DVPP run.

## Claims

1.    - Secondary voltage control system for an electrical grid comprising a transmission grid, the electrical grid comprising N electrical generators in the transmission grid, the N electrical generators supplying P pilot points in the transmission grid, M electrical generators among the N electrical generators being participating electrical generators participating in the secondary voltage control of the electrical grid, N, M and P being non-zero natural integers with M≤N, each participating electrical generator $G_i$, with i ∈ {1, .., M}, having a respective terminal voltage $V_i$, a respective reactive power $Q_i$ and a respective participation factor $Q_i^{pf}$ in the secondary voltage control, each participating electrical

generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control system further comprises a reactive power alignment module for calculating a setpoint reactive power $Q_i^{ref}$ of each participating electrical generator $G_i$ as a function of the specified setpoint values of the P pilot point voltages for each pilot point to have its specified setpoint value, an outer control loop module for calculating, for each participating electrical generator $G_i$, an adjusted setpoint reactive power $Q_i^{ref'}$ as a function of the setpoint reactive power $Q_i^{ref}$ and of the values of the reactive powers $Q_i$ of the M participating electrical generators $G_i$, and an inner control loop module for calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the participating electrical generator $G_i$ as a function of the adjustment voltage $u_i$ and of the participation factor $Q_i^{pf}$.

2. - Secondary voltage control system for an electrical grid comprising a transmission grid and R distribution grids, a border transformer between the transmission grid and each of the R distribution grids, each border transformer having a reactive power $Qb_j$, with $j \in \{1, .., R\}$, the electrical grid comprising N electrical generators in the transmission grid and the R distribution grids, the N electrical generators supplying P pilot points in the transmission grid and the R distribution grids, M electrical generators among the N electrical generators being participating electrical generators participating in the secondary voltage control of the electrical grid, N, M, P and R being non-zero natural integers with $M \leq N$, each participating electrical generator $G_i$, with $i \in \{1, .., M\}$, having a respective reactive power $Q_i$, a respective terminal voltage $V_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control system further comprises a reactive power alignment module for calculating a setpoint reactive power $Q_i^{ref}$ of each participating electrical generator $G_i$ as a function of the specified setpoint values of the P pilot point voltages for each pilot point to have its specified setpoint value, an outer control loop module for calculating, for each participating electrical generator $G_i$, an adjusted setpoint reactive power $Q_i^{ref'}$ as a function of the setpoint reactive power $Q_i^{ref}$, of the values of the reactive powers $Q_i$ of the M electrical generators $G_i$ and of the values of the reactive powers $Qb_j$ of the R border transformers, and an inner control loop module for calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the electrical generator $G_i$ as a function of the adjustment voltage $u_i$ and of the participation factor $Q_i^{pf}$.

3. - Secondary voltage control system as claimed in claim 1 or claim 2, wherein the input of the $AVR_i$ regulating the participating electrical generator $G_i$ is the sum of the setpoint terminal voltage $V_i^{ref}$ and of the adjustment voltage $u_i$ minus the terminal voltage $V_i$.

4. - Secondary voltage control method for an electrical grid comprising a transmission grid, the electrical grid comprising N electrical generators in the transmission grid, the N electrical generators supplying P pilot points in the transmission grid, M electrical generators among the N electrical generators being participating electrical generators participating in the secondary voltage control of the electrical grid, N, M and P being non-zero natural integers with $M \leq N$, each participating electrical generator $G_i$, with $i \in \{1, .., M\}$, having a respective terminal voltage $V_i$, a respective reactive power $Q_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control method comprises calculating a setpoint reactive power $Q_i^{ref}$ of each participating electrical generator $G_i$ as a function of the specified setpoint values of the P pilot point voltages for each pilot point to have its specified setpoint value, calculating, for each participating electrical generator $G_i$, an adjusted setpoint reactive power $Q_i^{ref'}$ as a function of the setpoint reactive power $Q_i^{ref}$ and of the values of the reactive powers $Q_i$ of the M participating electrical generators $G_i$, and calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the participating electrical generator $G_i$ as a function of the adjustment voltage $u_i$ and of the participation factor $Q_i^{pf}$.

5. - Secondary voltage control method for an electrical grid comprising a transmission grid and R distribution grids, a border transformer between the transmission grid and each of the R distribution grids, each border transformer having a reactive power $Qb_j$, with $j \in \{1, .., R\}$, the electrical grid comprising N electrical generators in the transmission grid and the R distribution grids, the N electrical generators supplying P pilot points in the transmission grid and the R distribution grids, M electrical generators among the N electrical generators being participating electrical generators participating in the secondary voltage control of the electrical grid, N, M, P and R being non-zero natural integers with $M \leq N$, each participating electrical generator $G_i$, with $i \in \{1, .., M\}$, having a respective reactive power $Q_i$, a respective terminal voltage $V_i$ and a respective participation factor $Q_i^{pf}$ in the secondary voltage control, each participating electrical generator $G_i$ being controlled by a respective automatic voltage regulator, $AVR_i$ with $i \in \{1, .., M\}$, which regulates the terminal voltage $V_i$ of the participating electrical generator $G_i$ as a function of a setpoint terminal voltage $V_i^{ref}$ and of the terminal voltage $V_i$ supplied by the participating electrical generator $G_i$ which is fed back to the $AVR_i$, wherein, a specified setpoint value being specified for each of the P pilot points, the secondary voltage control method comprises calculating a setpoint reactive power $Q_i^{ref}$ of each participating electrical generator $G_i$ as a function of the specified setpoint values of the P pilot point voltages for each pilot point to have its specified setpoint value, calculating, for each participating electrical generator $G_i$, an adjusted setpoint reactive power $Q_i^{ref'}$ as a function of the setpoint reactive power $Q_i^{ref}$, of the values of the reactive powers $Q_i$ of the M electrical generators $G_i$ and of the values of the reactive powers $Qb_j$ of the R border transformers, and calculating, for each participating electrical generator $G_i$, an adjustment voltage $u_i$ to be supplied to the $AVR_i$ of the participating electrical generator $G_i$ for the participating electrical generator $G_i$ to supply a reactive power $Q_i^{ref'}$, wherein for each participating electrical generator $G_i$, the $AVR_i$ further regulates the electrical generator $G_i$ as a function of the adjustment voltage $u_i$ and of the participation factor $Q_i^{pf}$.

6. - Computer program product comprising instructions that, when the program is executed on a computer, cause the computer to carry out the method according to one of claims 5 or 6.

EP 4 704 287 A1

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

Europäisches
Patentamt

European
Patent Office

Office européen
des brevets

# EUROPEAN SEARCH REPORT

**Application Number**

EP 24 31 5396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JITENDRA KUMAR GOYAL ET AL: "A Decentralised Control Strategy for Secondary Voltage Regulation", ARXIV.ORG, CORNELL UNIVERSITY LIBRARY, 201 OLIN LIBRARY CORNELL UNIVERSITY ITHACA, NY 14853, 27 May 2022 (2022-05-27), XP091233547, * pages 1-9 * ----- | 1-6 | INV. H02J3/16 H02J3/38 H02J3/46 |

**TECHNICAL FIELDS SEARCHED (IPC)**

H02J

The present search report has been drawn up for all claims

| Place of search | Date of completion of the search | Examiner |
|---|---|---|
| Munich | 7 February 2025 | Tchegho Kamdem, A |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

&　: member of the same patent family, corresponding
　　document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DONG, F.** ; **CHOWDHURY, B.H.** Secondary voltage regulation for improved power plant reactive power coordination. *Electric Power Components and Systems*, 2007, vol. 35 (10), 1181-1199
- **A. BOUZID** ; **B. MARINESCU** ; **G. DENIS**. Structural Analysis and Improved Reactive Power Alignment for Secondary Voltage Control. *Proc. of PowerTech*, 2019, https://hal.archives-ouvertes.fr/hal-02511464
- **A. BOUZID** ; **B. MARINESCU** ; **G. DENIS**. Structural Analysis and Improved Reactive Power Alignment for Secondary Voltage Control. *Proc. of PowerTech*, 2019
- **MBOUP, M.** ; **JOIN, C.** ; **FLIESS, M.** Numerical differentiation with annihilators in noisy environment. *Numerical Algorithms*, 2009, vol. 50 (4), 439-467
- **CHITOUR, Y.** Timevarying high-gain observers for numerical differentiation. *IEEE Transactions on Automatic Control*, 2002, vol. 47 (9), 1565-1569